# EUROPEAN PATENT APPLICATION

(11) **EP 1 911 603 A1**
(43) Date of publication of application: **16.04.2008**
(21) Application number: 06121991.1
(22) Date of filing: 09.10.2006
(51) Int. Cl.: B60B 3/08, B60B 3/12

(54) **Wheel for a vehicle**

(71) Applicant: Boamax Industrial Co., Ltd., Ping-Chen City, Tao-Yuan Hsien (TW)
(72) Inventor: Yeh, Yun-Chou, Taipei City (TW)
(74) Representative: Texier, Christian

(57) **Abstract**

A wheel (2) includes: a first wheel half (21) having a disk portion (211) formed with a central hole (213) that is defined by a hole-defining wall (2130), and a rim (212) extending from a periphery of the disk portion (211) ; and a second wheel half (22) having a disk portion (221) connected to the disk portion (211) of the first wheel half (21), and a rim (222) extending from a periphery of the disk portion (221) of the second wheel half (22). The disk portion (221) of the second wheel half (22) is formed with a middle hole (224) and a central bushing (223) that is bent from a periphery of the middle hole (224) and that protrudes axially into the central hole (213) in the disk portion (211) of the first wheel half (21) to contact intimately the hole-defining wall (2130) of the central hole (213).

## Description

The invention relates to a wheel for a vehicle, more particularly to a wheel having a wheel half formed with a punched bushing extending into a hole in another wheel half.

U.S. Patent Number 6,340,210 discloses a wheel for a vehicle that includes first and second wheel halves joined together and a center plate sandwiched between the first and second wheel halves. Each of the first and second wheel halves has a disk portion and a rim continuing from the disk portion. The first and second wheel halves and the center plate are connected together by means of a plurality of bolts, nuts and washers. Each of the washers extends through a respective one of holes in the first wheel half and into a respective one of holes in the second wheel half to contact intimately a hole-defining wall of the respective one of the holes in the second wheel half.

However, since the first and second wheel halves and the center plate are not integrally formed, undesired friction thereamong due to slight difference in rotation speeds occurs, thereby resulting in wearing of the washers and generation of an undesired clearance between each washer and the hole-defining wall of the respective one of the holes in the second wheel half. As a consequence, dirt and water can enter through the clearance and into the wheel.

Therefore, the object of the present invention is to provide a wheel that can overcome the aforesaid drawback associated with the prior art.

According to this invention, there is provided a wheel for a vehicle that comprises: a first wheel half having a disk portion formed with a central hole that is defined by a hole-defining wall, and a rim extending from a periphery of the disk portion; and a second wheel half having a disk portion connected to the disk portion of the first wheel half, and a rim extending from a periphery of the disk portion of the second wheel half away from the first wheel half. The rims of the first and second wheel halves extend in opposite directions and are adapted for mounting of a tire thereon. The disk portion of the second wheel half is formed with a middle hole and a central bushing that is bent from a periphery of the middle hole and that protrudes axially into the central hole in the disk portion of the first wheel half so as to contact intimately the hole-defining wall of the central hole.

Other features and advantages of the present invention will become apparent in the following detailed description of the preferred embodiments with reference to the accompanying drawings, of which:
Fig. 1 is a schematic sectional view of the first preferred embodiment of a wheel for a vehicle according to the present invention; and
Fig. 2 is a schematic sectional view of the second preferred embodiment of the wheel according to the present invention.

Before the present invention is described in greater detail with reference to the accompanying preferred embodiment, it should be noted herein that like elements are denoted by the same reference numerals throughout the disclosure.

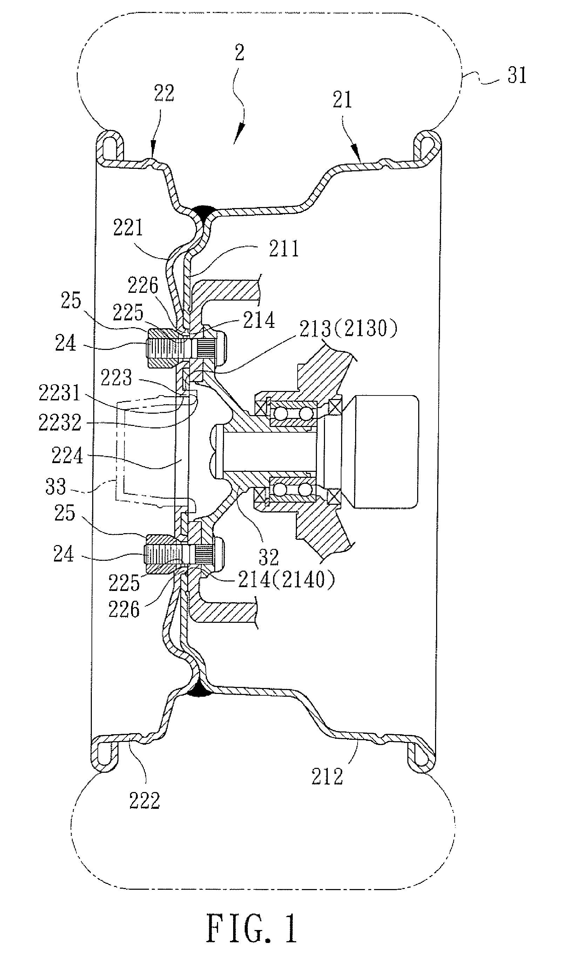

Referring to Figure 1, the first preferred embodiment of a wheel 2 according to the present invention is shown to be adapted to be mounted on a vehicle, and includes: a first wheel half 21 having a disk portion 211 formed with a central hole 213 that is defined by a hole-defining wall 2130, and a rim 212 extending from a periphery of the disk portion 211; and a second wheel half 22 having a disk portion 221 connected to the disk portion 211 of the first wheel half 21, and a rim 222 extending from a periphery of the disk portion 221 of the second wheel half 22 away from the first wheel half 21. The rims 212, 222 of the first and second wheel halves 21, 22 extend in opposite directions and are adapted for mounting of a tire 31 thereon. The disk portion 221 of the second wheel half 22 is formed with a middle hole 224 and a central bushing 223 that is bent from a periphery of the middle hole 224 and that protrudes axially into the central hole 213 in the disk portion 211 of the first wheel half 21 so as to contact intimately the hole-defining wall 2130 of the central hole 213.

In this embodiment, the central bushing 223 is in the form of a punched part punched from the disk portion 221 of the second wheel half 22.

The disk portion 211 of the first wheel half 21 is further formed with a plurality of first bolt holes 214, each of which is defined by a hole-defining wall 2140. The disk portion 221 of the second wheel half 22 is further formed with a plurality of second bolt holes 225 angularly displaced around the middle hole 224, and a plurality of bolt bushings 226, each of which is bent from a periphery of a respective one of the second bolt holes 225, and each of which protrudes axially into a respective one of the first bolt holes 214 so as to contact the hole-defining wall 2140 of the respective one of the first bolt holes 214.

In this embodiment, each of the bolt bushings 226 is in the form of a punched part punched from the disk portion 221 of the second wheel half 22.

The wheel 2 further includes a transmission axle 32 that is connected to the first and second wheel halves 21, 22 through a plurality of screw nuts 25 andaplurality of bolts 24. Each of the bolts 24 extends through a flange of the transmission axle 32, a respective one of the first bolt holes 214 and a respective one of the second bolt holes 225 to engage threadedly a respective one of the screw nuts 25. A center cap 33 extends through the middle hole 224, and contacts intimately an inner surface 2231 of the central bushing 223 and an end face 2232 of the central bushing 223 so as to cover sealingly the middle hole 224.

Since the central bushing 223 is in the form of a punched part punched from the disk portion 221 of the second wheel half 22 and envelops the central hole 213 in the first wheel half 21 completely, an integral appearance for the first and second wheel halves 21, 22 is achieved.

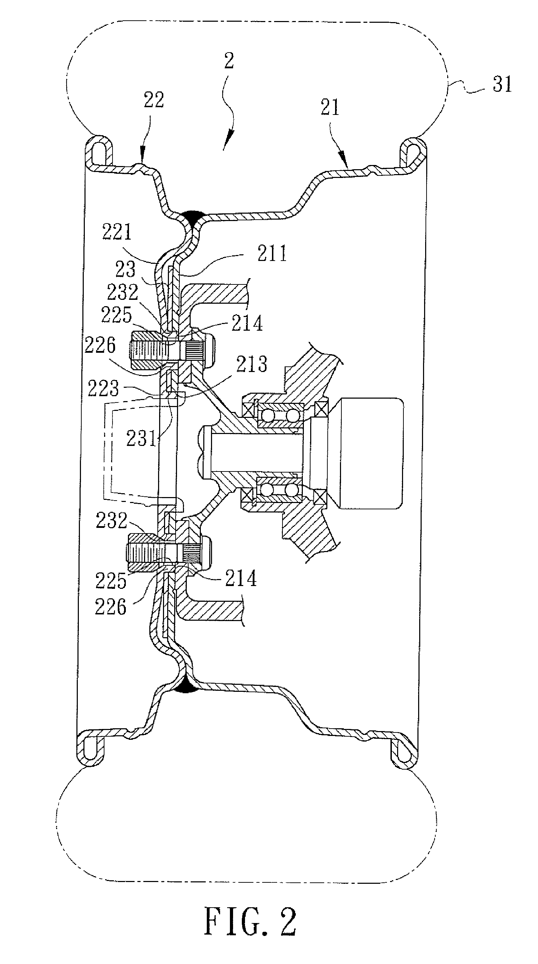

Referring to Figure 2, the second preferred embodiment of this invention differs from the previous embodiment in that a center plate 23 is sandwiched between the disk port ions 211, 221 of the first and second wheel halves 21, 22 for enhancing structural strength of the wheel 2. Each of the bolts 24 extends through the respective one of the first bolt holes 214, the center plate 23, and the respective one of the second bolt holes 225.

With the inclusion of the central bushing 223 and the bolt bushings 226 in the wheel 2 of this invention, the aforesaid drawback associated with the prior art can be mitigated. In addition, the washers employed in the aforesaid conventional wheel are dispensed with.

## Claims

1. A wheel(2) for a vehicle, comprising:
a first wheel half (21) having
a disk portion (211) formed with a central hole (213) that is defined by a hole-defining wall (2130), and
a rim (212) extending from a periphery of said disk portion (211); and
a second wheel half (22) having
adiskportion (221) connectedtosaiddiskportion (211) of said first wheel half (21), and
a rim (222) extending from a periphery of said disk portion (221) of said second wheel half (22) away from said first wheel half (21);
wherein said rims (212, 222) of said first and second wheel halves (21, 22) extend in opposite directions and are adapted for mounting of a tire (31) thereon; and
wherein said disk portion (221) of said second wheel half (22) is formed with a middle hole (224) and a central bushing (223) that is bent from a periphery of said middle hole (224) and that protrudes axially into said central hole (224) in said disk portion (211) of said first wheel half (21) so as to contact intimately said hole-defining wall (2130) of said central hole (213).

2. The wheel (2) as claimed in claim 1, wherein said central bushing (223) is in the form of a punched part punched from said diskportion (221) of said secondwheel half (22) .

3. The wheel (2) as claimed in claim 1, wherein said disk portion (211) of said first wheel half (21) is further formed with a plurality of first bolt holes (214), each of which is defined by a hole-defining wall (2140), said disk portion (221) of said second wheel half (22) being further formed with a plurality of second bolt holes (225) angularly displaced around said middle hole (224), and a plurality of bolt bushings (225), each of which is bent from a periphery of a respective one of said second bolt holes (225), and each of which protrudes axially into a respective one of said first bolt holes (214) so as to contact intimately said hole-defining wall (2140) of the respective one of said first bolt holes (214).

4. The wheel (2) as claimed in claim 3, wherein each of said bolt bushings (226) is in the form of a punched part punched from said disk portion (221) of said second wheel half (22).

5. The wheel (2) as claimed in claim 3, further comprising a center plate (23) sandwiched between said disk portions (211, 221) of said first and second wheel halves (21, 22).

6. The wheel (2) as claimed in claim 5, further comprising a plurality of screw nuts (25) and a plurality of bolts (24), each of which extends through a respective one of said first bolt holes (214), said center plate (23), and a respective one of said second bolt holes (225) to engage threadedly a respective one of said screw nuts (25) .
